# EUROPEAN PATENT SPECIFICATION

(11) **EP 3 700 299 B1**
(45) Date of publication and mention of the grant of the patent: **04.05.2022**
(21) Application number: 20157042.1
(22) Date of filing: 13.02.2020
(51) Int. Cl.: H05B 6/12, H05B 6/06

(54) **WIRELESS INDUCTION HEATING COOKER AND WIRELESS INDUCTION HEATING SYSTEM INCLUDING SAME**
DRAHTLOSER INDUKTIONSERWÄRMUNGSKOCHER UND DRAHTLOSES INDUKTIONSERWÄRMUNGSSYSTEM DAMIT
APPAREIL DE CUISSON À CHAUFFAGE PAR INDUCTION SANS FIL ET SYSTÈME DE CHAUFFAGE PAR INDUCTION SANS FIL LE COMPRENANT

(30) Priority: 20.02.2019 KR 20190020143
(43) Date of publication of application: 26.08.2020
(73) Proprietor: LG Electronics Inc., Seoul 07336 (KR)
(72) Inventor: NAM, Hyeunsik, Seoul 08592 (KR); KIM, Wan Soo, Seoul 08592 (KR); PARK, Byungkyu, Seoul 08592 (KR)
(74) Representative: Vossius & Partner Patentanwälte Rechtsanwälte mbB

(56) References cited:
- EP-A1- 2 583 750
- WO-A1-2018/223590
- JP-A- 2014 033 904

## Description

### BACKGROUND

### 1. Field

The present disclosure relates to a wireless induction heating cooker that can electrically figure out whether a main body and a lid are normally coupled, and a wireless induction heating system including the wireless induction heating cooker.

### 2. Background

A rice cooker is a cooking apparatus that can heat and cook various types of grain such as rice and is generally comprised of a main body and a lid. The lid is coupled to the main body, and seals the inside of the rice cooker. Heating and cooking operations of the rice cooker are performed in a state in which the inside of the rice cooker is sealed.

When a food item is heated and cooked in the rice cooker, pressure in the rice cooker is rapidly increased. In this case, when the lid and the main body are abnormally coupled, the lid may abnormally escape from the main body due to the pressure inside the rice cooker, and the impact that occurs when the lid escapes from the main body may trigger an explosion or a fire.

Accordingly, various methods for detecting whether the lid is normally coupled to guarantee safety of users have been suggested.

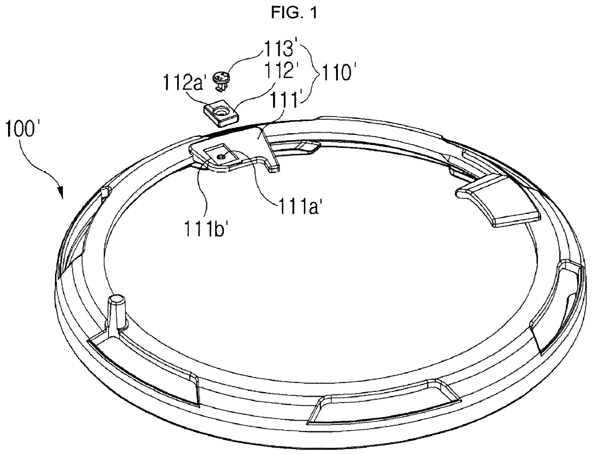

In relation to this, an apparatus for sensing locking of a lid of an electrical pressure rice cooker is disclosed in Korean Model Utility Publication No. 20-2009-0000032 (referred to as "prior art document"). Below, a method of sensing locking of a lid of the related art is described with reference to FIG. 1.

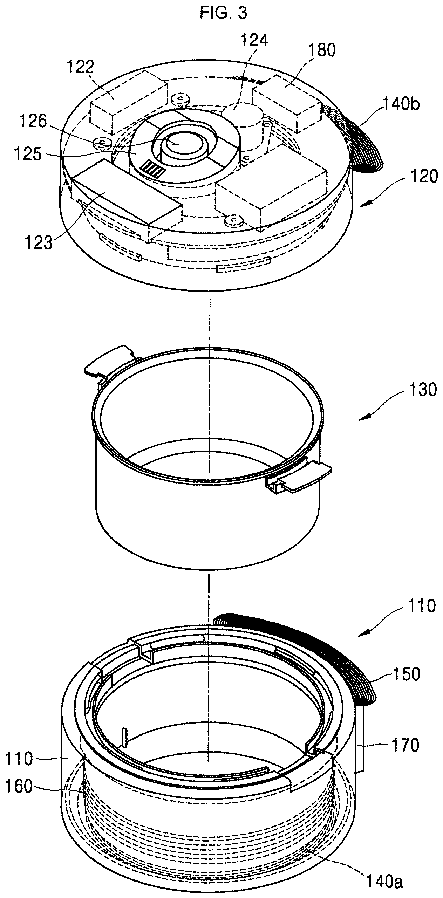

FIG. 1 is a view illustrating a method of sensing locking of a lid of an electric pressure rice cooker of the related art. FIG. 1 is excerpted from the drawing (FIG. 3) in the prior art document and illustrates an entire structure of a locking ring for sensing locking of a lid. Some of the reference numerals in FIG. 1 may differ from the reference numerals in the prior art document.

Referring to FIG. 1, a magnetic member 110' is installed on one side of a locking ring 100' that is swivably mounted onto the inside of the lid of the rice cooker, that is swiveled by a handle installed on the outside of the lid, and that locks or unlocks a main body and the lid of the rice cooker.

The magnetic member 110' is comprised of a plate-type bracket 111' extending in a circular center direction of the locking ring 100' at one side of an inner circumferential surface of the locking ring 100', a magnet 112' mounted onto an upper surface of the bracket 111', and a hook 113' allowing the magnet 112' to be coupled to the bracket 111'.

A reed switch is installed near the magnetic member 110' and is operated by magnetic properties of the magnet 112'. Specifically, when the locking ring 100' is swiveled in one direction and then the lid is locked, the reed switch is connected by the magnetic properties of the magnet 112', and, when the locking ring 100' is swiveled in the other direction and then the lid is unlocked, the reed switch is not affected by the magnetic properties of the magnet 112' and is unconnected.

A controller in the prior art document is electrically connected with the reed switch and, on the basis of whether the reed switch is connected, determines locking of the lid.

According to the prior art document, an additional component (the magnetic member 110' and the reed switch) for sensing locking of the lid has to be installed in the rice cooker, thereby requiring an additional installation space and causing an increase in production costs of the rice cooker.

According to the prior art document, wires for an electric connection between the reed switch and the controller (e.g., a PCB) are additionally required, thereby causing a decrease in productivity of the rice cooker.

JP 2014 033904 (A) relates to an electric rice cooking unit that is removably mounted on the power supply unit, the heating power incoming coil receives the supply of power from the heating power feeding coil in the state of being mounted on the power supply unit, and the lid unit is attached and detached to and from the rice cooking unit by rotating the lid unit relatively in the circumferential direction to the rice cooking unit.

WO 2018/223590 (A1)relates to a split-type cooking appliance that comprises a lid body coil that is partially located below the lid tooth and is located within the vertical projection range of the lid tooth, such that the lid body coil is positioned in the most internal position possible.

EP 2 583 750 (A1) relates to a cooking hob provided with a continuous support plate, and rotary driving means located below the support plate for driving rotary blades or paddles installed in a cooking vessel located on a treatment area of the support plate.

### SUMMARY

The present disclosure is directed to providing a wireless induction heating cooker that electrically finds out whether a lid and a main body are normally coupled, and a wireless induction heating system including the wireless induction heating cooker.

Additionally, the present disclosure is directed to providing an induction heating apparatus that supplies a magnetic field to a wireless induction heating cooker through a heating coil, and a wireless induction heating system including a wireless induction heating cooker that uses a magnetic field generated in an area with low efficiency of delivery of heat to an internal pot among magnetic fields supplied through the heating coil as a power source for an internal electronic device.

Further, the present disclosure is directed to providing a wireless induction heating cooker that informs a user of an abnormal coupling between a main body and a lid, and a wireless induction heating system including the wireless induction heating cooker.

Objectives of the present disclosure are not limited to the above-described ones. Additionally, other objectives and advantages that have not been mentioned may be clearly understood from the following description and may be more clearly understood from embodiments. Further, it will be understood that the objectives and advantages of the present disclosure may be realized via means and combinations thereof that are described in the appended claims.

The wireless induction heating cooker may determine a coupling state of a lid on the basis of an amount of power delivered to the lid at the time of a rotation coupling of the lid, thereby electrically finding out whether the lid and the main body are normally coupled.

Additionally, the wireless induction heating cooker may drive an electronic device using electric currents induced to a coil placed in parallel with a heating coil at a lower portion of an edge area of an internal pot, thereby using a magnetic field generated in an area with low efficiency of delivery of heat to the internal pot as a power source for an internal electronic device.

Further, at least one of the wireless induction heating cooker and the induction heating apparatus may output abnormality information visually when a coupling state of a lid is an abnormal state, thereby informing a user about an abnormal coupling between a main body and a lid.

The present disclosure may electrically find out whether the lid and the main body are normally coupled without an additional physical component, thereby accurately detecting a coupling state of the lid with no increase in production costs and with no reduction in productivity.

Additionally, the present disclosure may use a magnetic field generated in an area with low efficiency of delivery of heat to the internal pot as a power source for an internal electronic device, thereby efficiently using power wirelessly supplied by the induction heating apparatus for cooking operations.

Further, the present disclosure may inform a user about an abnormal coupling between the main body and the lid, thereby preventing an explosion or a fire during cooking, which is caused by an abnormal coupling of the lid.

Detailed effects of the present disclosure are described together with the above-described effects in the detailed description of the disclosure.

### BRIEF DESCRIPTION OF THE DRAWING

Embodiments are described in detail with reference to the following drawings, wherein:
FIG. 1 is a view illustrating a method of sensing locking of a lid of an electric pressure rice cooker of the related art;
FIG. 2 is a view illustrating an exemplary wireless induction heating cooker operating on an induction heating apparatus;
FIG. 3 is a view separately illustrating a lid, an internal pot and a main body constituting the wireless induction heating cooker in FIG. 2;
FIG. 4 is a view illustrating a rotation-coupling of a lid and a main body;
FIGS. 5a and 5b are views illustrating an arrangement of a first power receiving coil according to each example;
FIG. 6 is an inner block diagram illustrating a control flow of the wireless induction heating cooker and the induction heating apparatus in FIG. 2;
FIG. 7 is a view illustrating an example of a second power receiving coil and a power transmitting coil;
FIGS. 8a and 8b are views illustrating a position of a second power receiving coil, which is changed depending on whether the lid in FIG. 7 is rotation-coupled to a main body;
FIG. 9 is a view illustrating another example of a second power receiving coil and a power transmitting coil;
FIGS. 10a and 10b are views illustrating a position of a second power receiving coil, which is changed depending on whether the lid in FIG. 9 is rotation-coupled to a main body;
FIG. 11 is a view illustrating yet another example of a second power receiving coil and a power transmitting coil; and
FIG.12 is a view illustrating an exemplary wireless induction heating system.

### DETAILED DESCRIPTION

When any component is described as being "at an upper portion (or a lower portion)" of a component, or "on (or under)" a component, any component may be placed on the upper surface (or the lower surface) of the component, and an additional component may be interposed between the component and any component placed on (or under) the component.

When a component is described as being "connected," "coupled" or "connected" to another component, the component may be directly connected or able to be connected to another component; however, it is also to be understood that an additional component may be "interposed" between the two components, or the two components may be "connected," "coupled" or "connected" through an additional component.

The terms "A or B", "at least one of A or/and B", or "one or more of A or/and B" as used herein include all possible combinations of items enumerated with them. For example, "A or B", "at least one of A and B", or "at least one of A or B" means (1) including at least one A, (2) including at least one B, or (3) including both at least one A and at least one B.

The present disclosure relates to a wireless induction heating cooker that may electrically figure out whether a main body and a lid are normally coupled.

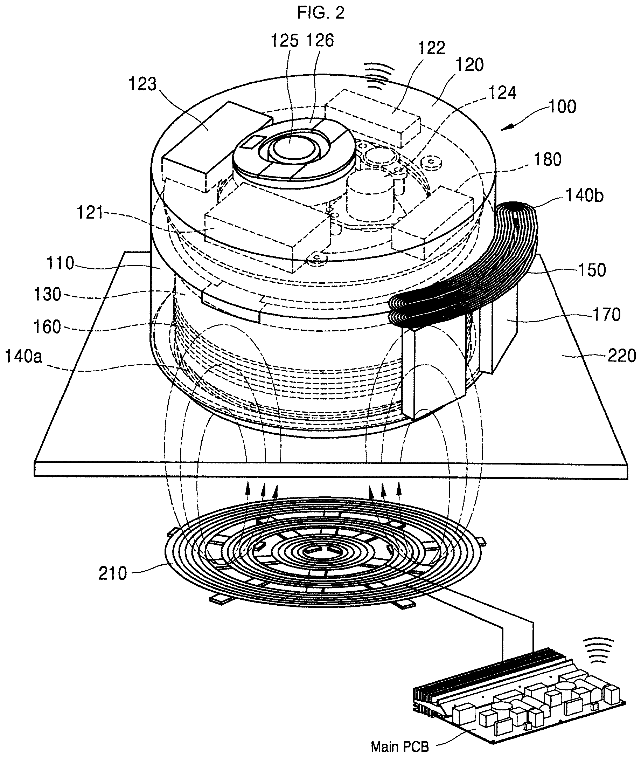

Below, an exemplary wireless induction heating cooker is described with reference to FIGS. 2 to 11.

FIG. 2 is a view illustrating an exemplary wireless induction heating cooker operating on an induction heating apparatus, and FIG. 3 is a view separately illustrating a lid, an internal pot and a main body constituting the wireless induction heating cooker in FIG. 2.

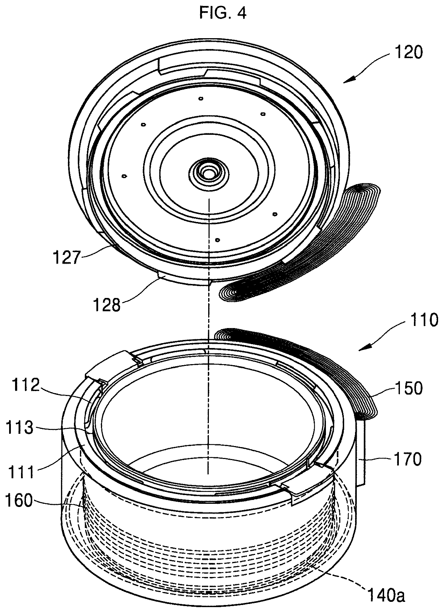

FIG. 4 is a view illustrating a rotation-coupling of a lid and a main body.

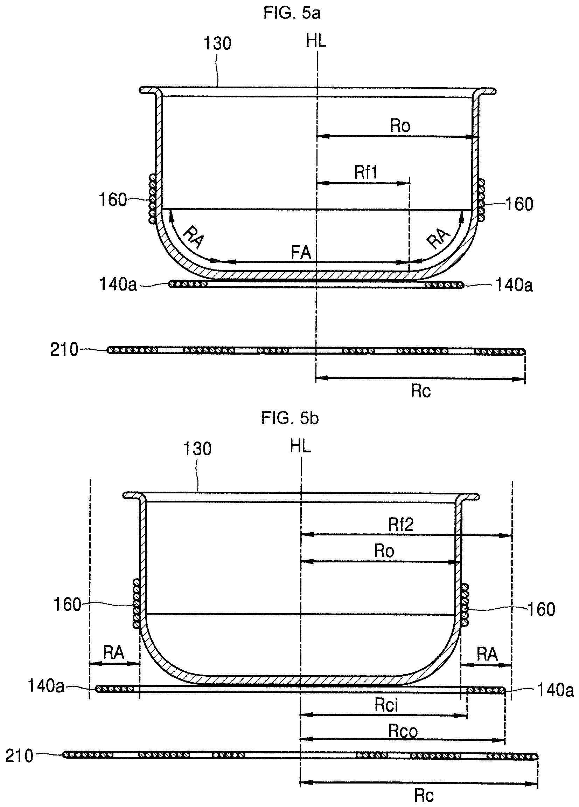

FIGS. 5a and 5b are views illustrating an arrangement of a first power receiving coil according to each example.

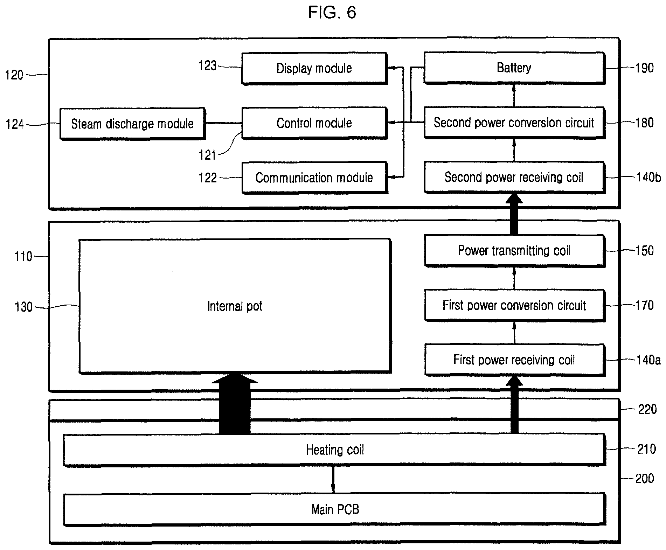

FIG. 6 is an inner block diagram illustrating a control flow of the wireless induction heating cooker and the induction heating apparatus in FIG. 2.

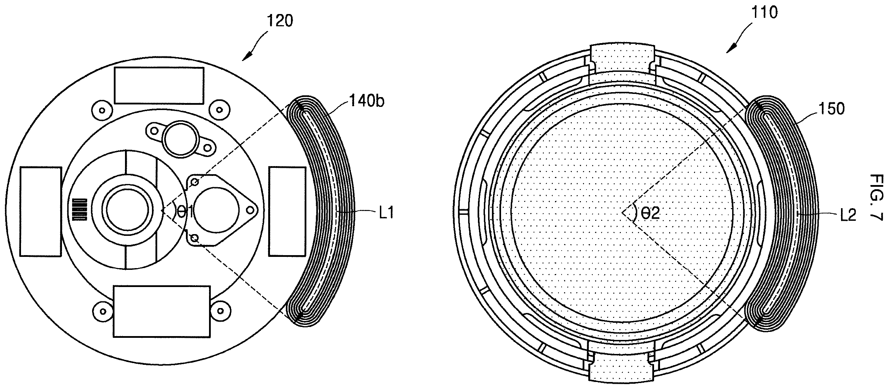

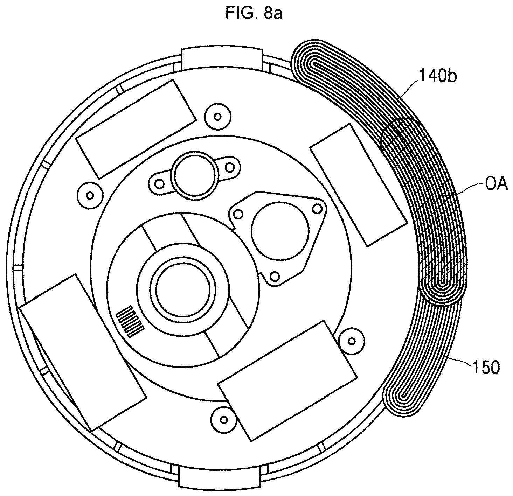

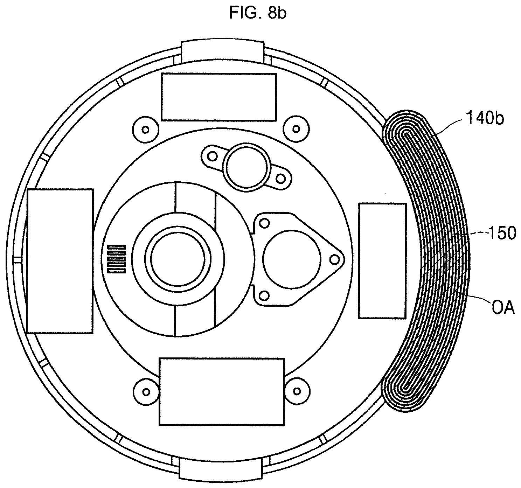

FIG. 7 is a view illustrating an example of a second power receiving coil and a power transmitting coil, and FIGS. 8a and 8b are views illustrating a position of a second power receiving coil, which is changed depending on whether the lid in FIG. 7 is rotation-coupled to a main body.

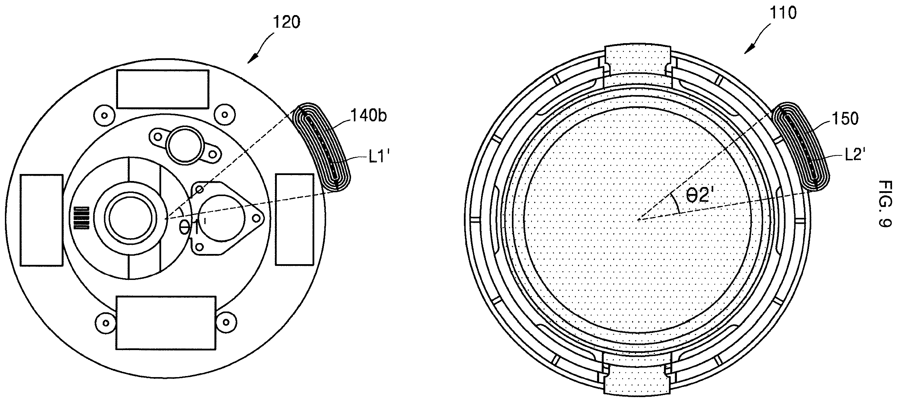

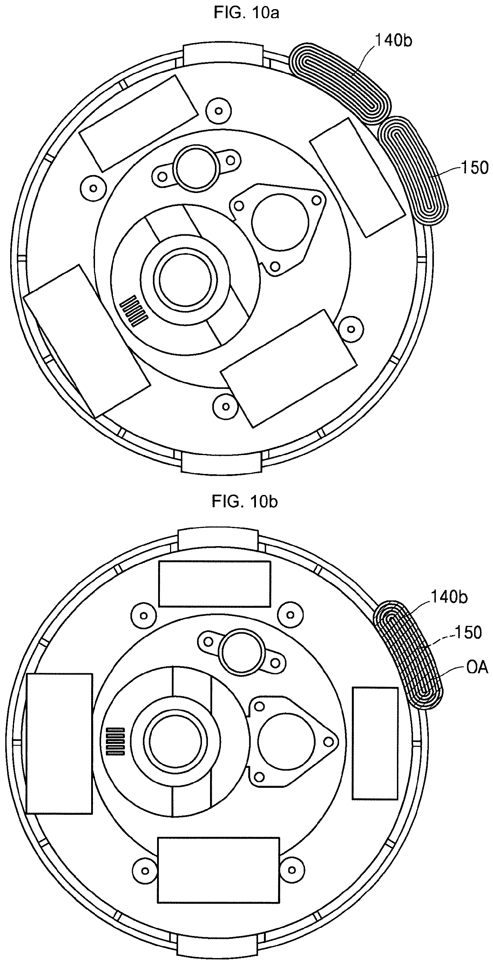

FIG. 9 is a view illustrating another example of a second power receiving coil and a power transmitting coil, and FIGS. 10a and 10b are views illustrating a position of a second power receiving coil, which is changed depending on whether the lid in FIG. 9 is rotation-coupled to a main body.

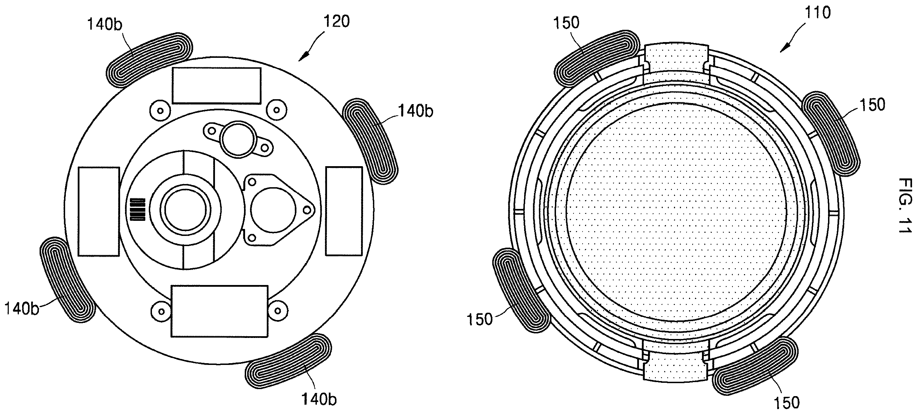

FIG. 11 is a view illustrating yet another example of a second power receiving coil and a power transmitting coil.

Referring to FIGS. 2 and 3, the exemplary wireless induction heating cooker 100 may include a main body 110, a lid 120, and an internal pot 130. The main body 110 may be provided with a first power receiving coil 140a and a power transmitting coil 150, and the lid 120 may be provided with a second power receiving coil 140b. Additionally, the lid 120 may include a control module 121, a communication module 122, a display module 123, a steam discharge module 124, a pressure weight 125, and a noise reduction module 126.

The wireless induction heating cooker 100 illustrated in FIGS. 2 and 3 is provided as an embodiment, and components of the wireless induction heating cooker 100 are not limited to those of the embodiment illustrated in FIGS. 2 and 3. When necessary, some components may be added, modified or removed.

The wireless induction heating cooker 100 may operate on any induction heating apparatus 200 that heats an item subject to heating through the process of electromagnetic induction.

The wireless induction heating cooker 100, as illustrated in FIG. 2, may operate in the state of being placed on an upper plate 220 of any induction heating apparatus 200 provided with a heating coil 210. Specifically, the wireless induction heating cooker 100 may operate in the state of being placed on the upper plate 220 on a perpendicular line of the heating coil 210.

A main PCB of the induction heating apparatus 200 may supply electric currents to the heating coil 210 and, accordingly, a magnetic field may be generated in the heating coil 210. The magnetic field generated in the heating coil 210 may induce electric currents to the below-described internal pot 130 and the first power receiving coil 140a.

The main body 110, which is a case supporting a lower portion and a lateral portion of the wireless induction heating cooker 100, may have a cylinder shape the upper portion of which is opened. An item subject to cooking may be cooked in the main body 110. Specifically, the main body 110 stores the internal pot 130 and various types of grain such as rice may be heated and cooked in the internal pot 130.

The internal pot 130 is stored in the main body 110 and may be heated by a magnetic field generated in the heating coil 210 of the induction heating apparatus 200. The internal pot 130 may have a shape corresponding to the shape of the main body 110. For example, when the main body 110, as illustrated in FIG. 3, has a cylinder shape, the internal pot 130 may also have a cylinder shape the upper surface of which is opened.

When the wireless induction heating cooker 100 is placed at an upper portion of the induction heating apparatus 200, a lower surface of the internal pot 130, and the heating coil 210 may be placed to face each other with a bottom surface of the main body 110 therebetween. When electric currents flow through the heating coil 210, a magnetic field generated in the heating coil 210 may induce electric currents to the internal pot 130, and Joule's heat may be generated in the internal pot 130 by the induced currents.

For generation of induced currents, the internal pot 130 may include any material having magnetic properties. The internal pot 130, for example, may include cast iron including iron (Fe), or clad in which iron (Fe), aluminum (Al), and stainless steel and the like are welded.

A surface area of a bottom surface of the internal pot 130 may be smaller than a surface area of the heating coil 210. In other words, when the heating coil 210 is a planar circular coil and the internal pot 130 has a cylinder shape, a radius of the bottom surface of the internal pot 130 is smaller than a coil radius (Rc) of the heating coil 210. When the surface area of the bottom surface of the internal pot 130 is designed to be smaller than the surface area of the heating coil 210 as described above, a magnetic field generated in the heating coil 210 may all be delivered to the bottom surface of the internal pot 130 without a leak in an area in which the internal pot 130 is placed.

The lid 120, which is a case sealing an upper portion of the wireless induction heating cooker 100, may be rotation-coupled to an upper surface of the main body 110. Specifically, the lid 120 may be rotation-coupled to the upper surface of the main body 110 and may be attached to and detached from the main body 110.

The rotation-coupling may be any coupling by which the lid 120 is coupled to or decoupled from the main body 110 by horizontally rotating with respect to the upper surface of the main body 110. The rotation-coupling, for example, may be any coupling by which a coupling projection and a coupling groove provided respectively at any two objects are horizontally engaged and by which the two objects are coupled.

As an example, the main body 110 may be provided with a first coupling ring 111 on the upper surface of the main body 110, and the lid 120 may be provided with a second coupling ring 127 on a lower surface of the lid 120. In this case, the lid 120 may be attached to and detached from the upper surface of the main body 110 through the rotation-coupling of the first coupling ring 111 and the second coupling ring 127.

Specifically, the first coupling ring 111 may be provided along a perimeter of the upper surface of the main body 110 in a ring shape, and the second coupling ring 127 may be provided along a perimeter of the lower surface of the lid 120 in a ring shape. Any one of the first coupling ring 111 and the second coupling ring 127 may be inserted into the other one and then rotated such that the first coupling ring 111 and the second coupling ring 127 are rotation-coupled.

As an example, as illustrated in FIG. 4, the first coupling ring 111 may be depressed from the upper surface of the main body 110, and the second coupling ring 127 may protrude from the lower surface of the lid 120. In other words, the first coupling ring 111 may include a groove 113 that is depressed downwards, and the second coupling ring 127 may protrude downwards. Accordingly, the second coupling ring 127 may be inserted into the groove 113 of the first coupling ring 111.

The second coupling ring 127 may be inserted into the groove 113 of the first coupling ring 111, and then may be horizontally rotated with respect to the first coupling ring 111 and may be rotation-coupled to the first coupling ring 111. To this end, each of the first coupling ring 111 and the second coupling ring 127 may include a plurality of members that are engaged with each other when the second coupling ring 127 is rotated.

For example, the first coupling ring 111 may include a plurality of guide jaws, and the second coupling ring 127 may include a plurality of stopping jaws 128, as illustrated in FIG. 4. When the second coupling ring 127 is inserted into the groove 113 of the first coupling ring 111 and then is rotated, the plurality of stopping jaws 128 formed at the second coupling ring 127 may be engaged respectively with the plurality of guide jaws 112 formed at the first coupling ring 111.

Specifically, the plurality of guide jaws 112 may protrude in one horizontal direction (e.g., an inward direction) and may be formed at the first coupling ring 111. The plurality of stopping jaws 128 may protrude in the other horizontal direction (e.g., an outward direction) and may be formed at the second coupling ring 127. Accordingly, the guide jaw 112 and the stopping jaw 128 may be engaged with each other radially when the second coupling ring 127 is rotated with respect to the first coupling ring 111.

In other words, in a state in which the guide jaw 112 and the stopping jaw 128 are arranged radially not to meet each other, the second coupling ring 127 may be inserted into the first coupling ring 111. When the second coupling ring 127 is rotated in the state of being inserted into the first coupling ring 111, the stopping jaw 128 may be moved radially with respect to the guide jaw 112, and, when the second coupling ring 127 is rotated with respect to the first coupling ring 111 by a specific angle, the plurality of guide jaws 112 may be completely engaged with the plurality of stopping jaws 128.

When the guide jaw 112 is engaged with the stopping jaw 128, as long as the second coupling ring 127 is not rotated in an opposite direction, the lid 120 may not be separated from the main body although an external force is applied perpendicularly (upwards or downwards) to the lid 120 and the main body 110.

With the above-described structure, the lid 120 may be completely separated from the main body. Accordingly, the lid 120 may be readily cleaned in relation to use of the wireless induction heating cooker 100.

The process in which the lid 120 is rotation-coupled to the main body 110 is described above with reference to the structure illustrated in FIG. 4. However, the lid 120 of the disclosure may be rotation-coupled to the main body 110 through various structures used in the art to which the disclosure pertains, in addition to the structure illustrated in FIG. 4.

The lid 120, as illustrated in FIG. 2, may be provided with at least one of electronic devices. The lid 120, for example, may be provided with a control module 121 controlling entire operations of the wireless induction heating cooker 100, a communication module 122 performing data communication with the main PCB of the induction heating apparatus 200, a display module 123 visually outputting state information of the wireless induction heating cooker 100 and the like. Though not illustrated in FIG. 2, the lid 120 may further include a battery 190 for supplying a power source to the above-described control module 121, communication module 122, and display module 123.

The control module 121, the communication module 122, and the display module 123 may be implemented as a printed circuit board (PCB) comprised of a plurality of integrated circuits (IC).

The lid 120 may also be provided with a pressure weight 125 for maintaining internal pressure of the wireless induction heating cooker 100 at a constant level, and a noise reduction module 126 in which a sound absorption member is built to reduce noise when steam is discharged. In addition, the lid 120 may be provided with a steam discharge module 124 (e.g., a solenoid valve) for discharging internal steam of the wireless induction heating cooker 100 outwards according to a specific control signal.

The first power receiving coil 140a may be provided on the bottom surface of the main body 110, and electric currents may be induced to the first power receiving coil 140a by a magnetic field generated in the heating coil 210.

The first power receiving coil 140a may have a ring shape with a predetermined inner diameter and a predetermined outer diameter, and may be placed at any position of the bottom surface of the main body 110. However, the first power receiving coil 140a may be preferably placed in parallel with the heating coil 210 at a lower portion of an edge area of the internal pot 130 such that efficiency of heating of the internal pot 130 is maximized through the process of electromagnetic induction.

The edge area, which is an area defined in a radial direction with respect to a central perpendicular line of the internal pot 130, may be an area adjacent to a cylindrical surface of the internal pot 130. In other words, the edge area may be an area adjacent to a circumference of the internal pot 130 when the internal pot 130 is seen from its top. Below, the edge area of the internal pot 130 is described with reference to FIGS. 5a and 5b.

Referring to FIG. 5a, an edge portion (referred to as "rounded portion") of the bottom surface of the internal pot 130 may be rounded such that an item subject to cooking is easily taken out after cooking of the item subject to cooking is completed. Accordingly, the bottom surface of the internal pot 130 may include a flat plate area (FA) that is a flat portion and that is formed in parallel with the heating coil 210, and a rounded portion that is rounded at a connected portion of the bottom surface and the lateral surface of the internal pot 130.

As an example, the edge area (RA) of the internal pot 130 may be the same as the rounded portion. In this case, the first power receiving coil 140a may be placed horizontally at the edge area (RA) of the internal pot 130, i.e., a lower portion of the rounded portion.

Specifically, the flat plate area (FA) of the bottom surface of the internal pot 130 may be formed within a first reference radius (Rf1) with respect to the central perpendicular line (HL) of the internal pot 130, and the edge area (RA) of the bottom surface of the internal pot 130 may be formed between the first reference radius (Rf1) and an outer diameter (Ro) of the internal pot 130. In this structure, the first power receiving coil 140a may be placed in an area between the first reference radius (Rf1) and the outer diameter (Ro) of the internal pot 130, which is the edge area (RA).

A distance between the edge area (RA) and the heating coil 210 may be greater than a distance between the flat plate area (FA) and the heating coil 210. Accordingly, an amount of heat delivered by a magnetic field generated in the heating coil 210 may be smaller in the edge area (RA) than in the flat plate area (FA)..

The first power receiving coil 140a, as described above, may be placed at the lower portion of the edge area (RA) to which a relatively small amount of heat is delivered, thereby receiving power from the heating coil 210 without largely reducing an entire amount of heat delivered to the internal pot 130.

As another example, referring to FIG. 5b, the edge area (RA) of the internal pot 130 may be perpendicularly formed outside of the internal pot 130. Specifically, the edge area (RA) of the internal pot 130 may be formed between the outer diameter (Ro) of the internal pot 130, and a second reference radius (Rf2) larger than the outer diameter (Ro) of the internal pot 130.

Accordingly, the first power receiving coil 140a may be placed outside of the internal pot 130 when the internal pot 130 is seen from its top. That is, the first power receiving coil 140a having a structure, in which the inner diameter (Rci) of the first power receiving coil 140a is larger than the outer diameter (Ro) of the internal pot 130, may be placed at the lower portion of the internal pot 130.

However, the outer diameter (Rco) of the first power receiving coil 140a may be smaller than the coil radius (Rc) of the heating coil 210 such that induced currents are efficiently generated in the first power receiving coil 140a.

In other words, as illustrated in FIG. 5b, the inner diameter (Rci) of the first power receiving coil 140a may be designed to be larger than the outer diameter (Ro) of the internal pot 130, and the outer diameter (Rco) of the first power receiving coil 140a may be designed to be smaller than the coil radius (Rc) of the heating coil 210. Accordingly, an area formed by the first power receiving coil 140a may all be perpendicularly included in an area formed by the heating coil 210.

Thus, in the embodiment illustrated in FIG. 5b, a magnetic field generated in the heating coil 210 may be delivered to the first power receiving coil 140a without a leak within an area in which the first power receiving coil 140a is placed.

The first power receiving coil 140a, as described above, is placed at the lower portion of the edge area (RA) in which a perpendicular delivery of heat to the internal pot 130 does not occur. Accordingly, the first power receiving coil 140a may receive power from the heating coil 210 without reducing an amount of heat delivered to the internal pot 130.

The present disclosure, as described above, may use a magnetic field generated in an area having low efficiency of delivery of heat to the internal pot 130 as a power source for an internal electronic device according to a below-described method, thereby efficiently using power supplied wirelessly by the induction heating apparatus 200 for cooking operations.

A lateral surface heating coil 160 may be placed perpendicularly on an outer circumferential surface of the internal pot 130, may be connected to the first power receiving coil 140a, and may heat the internal pot 130 using electric currents induced to the first power receiving coil 140a.

Referring back to FIGS. 2, 5a and 5b, the lateral surface heating coil 160 may be wound along the outer circumferential surface of the internal pot 130, and, accordingly, may be placed in close contact with the outer circumferential surface of the internal pot 130. If the main body 110 is provided with an internal pot support member for supporting the internal pot 130 in the main body 110, and the internal pot support member supports the outer circumferential surface of the internal pot 130 as well as the bottom surface of the internal pot 130, the lateral surface heating coil 160 may also be placed on the internal pot support member.

The lateral surface heating coil 160 may be perpendicularly placed. Specifically, the lateral surface heating coil 160 is a coil having a plurality of layers according to the number of its turns, and each of the layers may be perpendicularly arranged in parallel along the outer circumferential surface of the internal pot 130.

The lateral surface heating coil 160 may be electrically connected with the first power receiving coil 140a. In other words, one end of the lateral surface heating coil 160 may be connected with one end of the first power receiving coil 140a. Thus, the first power receiving coil 140a and the lateral surface heating coil 160 may be implemented as a single metallic wire, and, in this case, the first power receiving coil 140a and the lateral surface heating coil 160 may be distinguished according to their positions and functions.

The lateral surface heating coil 160 may be electrically connected with the first power receiving coil 140a, and, accordingly, electric currents induced to the first power receiving coil 140a may flow through the lateral surface heating coil 160. When electric currents flow through the lateral surface heating coil 160, a magnetic field may be generated in the lateral surface heating coil 160, and the magnetic field generated in the lateral surface heating coil 160 may induce electric currents to the outer circumferential surface of the internal pot 130 and may heat the internal pot 130, specifically, the lateral surface of the internal pot 130.

The present disclosure, as described above, may use a magnetic field generated in an area having low efficiency of delivery of heat to the bottom surface of the internal pot to heat the lateral surface of the internal pot, thereby efficiently using power output by the heating coil in heating the internal pot.

The power transmitting coil 150 may be provided on one lateral surface of the main body 110, and may receive the electric currents induced to the first power receiving coil 140a and generate a magnetic field.

Referring to FIGS. 2 and 3, the power transmitting coil 150 may be supported by any support member and may be fixed on one lateral surface of the main body 110. The power transmitting coil 150 may be placed in close contact with the lateral surface of the main body 110 such that volume of the wireless induction heating cooker 100 is minimized.

The power transmitting coil 150 may have a flat plate shape and may be placed horizontally on the lateral surface of the main body 110 to face the below-described second power receiving coil 140b. That is, the power transmitting coil 150 may be placed perpendicularly on the lateral surface of the main body 110.

The power transmitting coil 150 may be electrically connected with the first power receiving coil 140a. The electric currents induced to the first power receiving coil 140a may be supplied to the power transmitting coil 150 as the power transmitting coil 150 is electrically connected with the first power receiving coil 140a. When the electric currents flow through the power transmitting coil 150, a magnetic field may be generated in the power transmitting coil 150.

The wireless induction heating cooker 100 may further include a first power conversion circuit 170 that converts the electric currents induced to the first power receiving coil 140a and that supplies the converted electric currents to the power transmitting coil 150.

Referring to FIG. 2, the first power conversion circuit 170 may be provided on one lateral surface of the main body 110 in the form of a packaged integrated circuit. Specifically, the first power conversion circuit 170 may be fixedly provided on one lateral surface of the main body 110 at a lower portion of the power transmitting coil 150.

Referring to FIG. 6, an input terminal of the first power conversion circuit 170 may be connected to the first power receiving coil 140a, and an output terminal of the first power conversion circuit 170 may be connected to the power transmitting coil 150. Accordingly, the first power conversion circuit 170 may convert the electric currents induced to the first power receiving coil 140a into stable high-frequency currents and may supply the same to the power transmitting coil 150.

An amount of electric currents induced to the first power receiving coil 140a may vary depending on an output from the heating coil 210, load of the internal pot 130 (moisture included in an item subject to cooking, an amount of an item subject to cooking, and the like). Additionally, an amount of electric currents induced to the first power receiving coil 140a may also vary depending on a degree of matching between coils, which is determined based on a relative position of the heating coil 210 and the wireless induction heating cooker 100.

The first power conversion circuit 170, as described above, may store the electric currents induced to the first power receiving coil 140a as a predetermined voltage to minimize changes in the amount of the electric currents, and may convert the stored voltage into stable high-frequency currents and supply the stable high-frequency currents to the power transmitting coil 150. Accordingly, the power transmitting coil 150 may generate a magnetic field by receiving the high-frequency currents.

The second power receiving coil 140b may be provided on one lateral surface of the lid 120.

Referring to FIGS. 2 and 3, the second power receiving coil 140b may be supported by any support member and may be fixed on one lateral surface of the lid 120. The second power receiving coil 140b may be placed in close contact with the lateral surface of the lid 120 such that volume of the wireless induction heating cooker 100 is minimized.

Specifically, like the power transmitting coil 150, the second power receiving coil 140b may have a flat plate shape and may be placed horizontally on the lateral surface of the lid 120 to face the power transmitting coil 150. That is, the second power receiving coil 140b may be placed perpendicularly on the lateral surface of the lid 120.

When electric currents flow through the power transmitting coil 150 in the state in which the second power receiving coil 140b and the power transmitting coil 150 face each other, electric currents may be induced to the second power receiving coil 140b by a magnetic field generated in the power transmitting coil 150.

In this case, an amount of the electric currents induced to the second power receiving coil 140b may differ depending on an arrangement of the power transmitting coil 150 and the second power receiving coil 140b. A specific arrangement of the power transmitting coil 150 and the second power receiving coil 140b, and a process of delivering power according to a relative position relation of each of the coils are described hereunder with reference to FIGS. 7 to 11..

The second power receiving coil 140b may supply electric currents induced by a magnetic field generated in the power transmitting coil 150 to at least one of electronic devices provided at the lid 120.

Referring to FIGS. 2 and 6, the second power receiving coil 140b may be electrically connected to a plurality of electronic devices in the lid 120. Accordingly, each of the electronic devices in the lid 120 may be supplied with induced currents generated in the second power receiving coil 140b as a power source.

The plurality of electronic devices may operate on the basis of the power source supplied by the second power receiving coil 140b. For example, the control module 121 may control entire operations (e.g., a discharge and a cutoff of steam of the steam discharge module 124) of the wireless induction heating cooker 100 using the power source supplied by the second power receiving coil 140b, and the communication module 122 may perform data communication with a main PCB of the induction heating apparatus 200 using the power source supplied by the second power receiving coil 140b. Additionally, the display module 123 may visually output state information of the wireless induction heating cooker 100 using the power source supplied by the second power receiving coil 140b.

The wireless induction heating cooker 100, as illustrated in FIG. 2, may further include a second power conversion circuit 180 that delivers electric currents, induced to the second power receiving coil 140b, to an electronic device in the lid 120.

Like the first power conversion circuit 170, the second power conversion circuit 180 may be provided in the lid 120 in the form of a packaged integrated circuit. Referring to FIG. 6, an input terminal of the second power conversion circuit 180 may be connected to the second power receiving coil 140b, and an output terminal of the second power conversion circuit 180 may be connected to each of the electronic devices in the lid 120.

Accordingly, the second power conversion circuit 180 may convert electric currents induced to the second power receiving coil 140b into a predetermined-frequency AC voltage or into an predetermined-magnitude DC voltage, and may supply the predetermined-frequency AC voltage and the predetermined-magnitude DC voltage to each electronic device.

Specifically, AC currents are induced to the second power receiving coil 140b, and each electronic device in the lid 120 may be supplied with the predetermined-frequency AC voltage or the predetermined-magnitude DC voltage as a power source to perform operations, according to its specification.

The second power conversion circuit 180 may store the electric currents induced to the second power receiving coil 140b as a DC voltage, may convert the stored DC voltage into a predetermined-frequency AC voltage adequate for specifications of each electronic device, and may output the predetermined-frequency AC voltage. Additionally, the second power conversion circuit 180 may store the electric currents induced to the second power receiving coil 140b as a DC voltage, may increase or decrease a voltage of the stored DC voltage, and may output a predetermined-magnitude DC voltage adequate for specifications of each electronic device. Accordingly, each electronic device may operate using a power source and voltage adequate for its specifications.

Referring back to FIG. 6, the exemplary wireless induction heating cooker 100 may further include a battery 190 that stores the electric currents induced to the second power receiving coil 140b.

The battery 190 may be provided in the lid 120 and may store the electric currents induced to the second power receiving coil 140b as reserved power. To this end, the second power conversion circuit 180 may supply the electric currents induced to the second power receiving coil 140b to the battery 190 to charge the battery 190.

The battery 190 may be connected to each of the electronic devices in the lid 120 and each electronic device may receive a power source from the battery 190 and may operate. For example, when each of the electronic devices operates by receiving a power source output from the second power conversion circuit 180 and, then when the second power conversion circuit 180 no longer outputs a power source, may operate by receiving a power source output from the battery 190.

Below, a specific arrangement of the power transmitting coil 150 and the second power receiving coil 140b, and a process of delivering power according to a relative position of each of the coils are described hereunder, with reference to FIGS. 7 to 11.

The power transmitting coil 150 is formed along an outer surface of the main body 110 on one lateral surface of the upper portion of the main body 110 to have a first length, and the second power receiving coil 140b may be formed along an outer surface of the lid 120 on one lateral surface of the lid 120 to have a second length.

The power transmitting coil 150 is placed along the outer surface of the main body 110. Accordingly, the power transmitting coil 150 may be formed to correspond to the shape of the main body 110. Additionally, the second power receiving coil 140b is placed along the outer surface of the lid 120. Accordingly, the second power receiving coil 140b may be formed to correspond to the shape of the lid 120.

Referring to FIGS. 7 and 9, when the main body 110, for example, has a cylinder shape, the power transmitting coil 150 may have a deformed oval shape that is formed along an outer circumferential surface of the main body 110 on one lateral surface of the upper portion of the main body 110. Specifically, a major axis of the power transmitting coil 150 has an oval shape with a circular arc shape in parallel with the outer circumferential surface of the main body 110. In this case, the major axis of the power transmitting coil 150 may have a first length (L1, L1').

When the main body 110 has a rectangle pillar shape, the power transmitting coil 150 may have a rectangle shape that is formed along the outer surface of the main body 110 on one lateral surface of the upper portion of the main body 110. Specifically, the power transmitting coil 150 may have a rectangle shape in which a side extending horizontally is a straight line corresponding to the outer surface of the main body 110. In this case, a length of a side in close contact with the outer surface of the main body 110 may be the first length.

Referring back to FIGS. 7 and 9, when the lid 120 has a cylinder shape, the second power receiving coil 140b may have a deformed oval shape that is formed along an outer circumferential surface of the lid 120 on one lateral surface of a lower portion of the lid 120. Specifically, a major axis of the second power receiving coil 140b may have an oval shape with a circular arc shape in parallel with the outer circumferential surface of the lid 120. In this case, the major axis of the second power receiving coil 140b may have a second length (L2, L2').

When the lid 120 has a rectangle pillar shape, the second power receiving coil 140b may have a rectangle shape that is formed along the outer surface of the lid 120 on one lateral surface of the lower portion of the lid 120. Specifically, the second power receiving coil 140b may have a rectangle shape in which a side extending horizontally is a straight line corresponding to the outer surface of the lid 120. In this case, a length of a side in close contact with the outer surface of the lid 120 may be the second length.

The first length (L1, L1') and the second length (L2, L2') may be determined in designing a wireless induction heating cooker according to the needs. The first length (L1, L1') and the second length (L2, L2'), as described below, are preferably set to be the same to accurately detect whether the lid 120 is rotation-coupled.

When the main body 110 and the lid 120 have a cylinder shape respectively, the power transmitting coil 150 may be formed along a cylindrical surface of the main body 110 within a first central angle, and the second power receiving coil 140b may be formed along a cylindrical surface of the lid 120 within a second central angle.

The power transmitting coil 150 and the second power receiving coil 140b may be respectively placed on the outer surfaces of the cylinder-shaped main body 110 and the cylinder-shaped lid 120, i.e., along the cylindrical surfaces of the main body 110 and the lid 120.

The power transmitting coil 150, as illustrated in FIGS. 7 and 9, may have a deformed oval shape that is formed along the outer circumferential surface of the main body 110, and the second power receiving coil 140b may have a deformed oval shape that is formed along the outer circumferential surface of the lid 120.

In this case, the power transmitting coil 150 may be formed within the first central angle (θ1, θ1') with respect to a central perpendicular line of the wireless induction heating cooker 100, and the second power receiving coil 140b may be formed within the second central angle (θ2, Θ2') with respect to the central perpendicular line of the wireless induction heating cooker 100.

Unlike the power transmitting coil 150 and the second power receiving coil 140b in FIGS. 7 and 9, the power transmitting coil 150 and the second power receiving coil 140b may have a deformed rectangle shape in which a side extending horizontally comes into close contact with the main body 110 and the lid 120 respectively. Even in this case, the power transmitting coil 150 may be formed within the first central angle (θ1, θ1') with respect to the central perpendicular line of the wireless induction heating cooker 100, and the second power receiving coil 140b may be formed within the second central angle (θ2, Θ2') with respect to the central perpendicular line of the wireless induction heating cooker 100.

The first central angle (θ1, θ1') and the second central angle (θ2, Θ2') may be set in designing a wireless induction heating cooker according to the needs. The first central angle (θ1, θ1') and the second central angle (θ2, θ2'), as described below, are preferably set to be the same to accurately detect whether the lid 120 is rotation-coupled.

However, even when the lengths (the first length and the second length), at which the power transmitting coil 150 and the second power receiving coil 140b are formed, or the angles (the first central angel and the second central angle), at which the power transmitting coil 150 and the second power receiving coil 140b are formed, are the same, widths of the power transmitting coil 150 and the second power receiving coil 140b may differ.

As an example, when the lengths of the major axes of the two coils extending in a circular arc direction are the same in the case in which the power transmitting coil 150 and the second power receiving coil 140b have a deformed oval shape, lengths of short axes of the two coils, which are formed in a direction perpendicular to the circular arc direction, may differ.

As another example, even when the length of any side of each of the coils in close contact with the main body 110 and the lid 120 is the same in the case in which the power transmitting coil 150 and the second power receiving coil 140b have a deformed rectangle shape, a length of another side of each of the coils, which are formed in a direction perpendicular to the circular arc direction, may differ.

Further, the power transmitting coil 150 and the second power receiving coil 140b may have the completely same size and shape. In other words, when the power transmitting coil 150 and the second power receiving coil 140b have a deformed oval shape in the above-described embodiment, curvature of the cylindrical surfaces of the ovals as well as the lengths of the major and short axes of the two coils may be the same. Furthermore, when the power transmitting coil 150 and the second power receiving coil 140b have a deformed rectangle shape, the length of each side of the two coils may be the same.

Additionally, the second power receiving coil 140b and the power transmitting coil 150 may form an overlapped area (OA) according to a degree to which the lid 120 rotates with respect to the main body 110. Specifically, the second power receiving coil 140b and the power transmitting coil 150 may form an overlapped area (OA) having a different surface area according to the degree of rotation-coupling described with reference to FIG. 4.

The overlapped area (OA) may be defined as an area in which the second power receiving coil 140b and the power transmitting coil 150 are overlapped when the wireless induction heating cooker 100 is seen from its top.

Referring to FIGS. 4 and 8a, when the second coupling ring 127 is inserted into the first coupling ring 111 in a state in which the plurality of guide jaws 112 and the plurality of stopping jaws 120 are placed not to meet each other radially, the second power receiving coil 140b and the power transmitting coil 150 may be partially overlapped. In other words, the second power receiving coil 140b and the power transmitting coil 150 may form an overlapped area (OA) having a predetermined width.

Referring to FIGS. 4 and 8a, when the second coupling ring 127 rotates in a state of being inserted into the first coupling ring 111, each stopping jaw 128 moves radially with respect to each guide jaw 112, and the plurality of stopping jaws 129 may be completely engaged with the plurality of guide jaws 112. In this case, the second power receiving coil 140b and the power transmitting coil 150 may be completely overlapped. In other words, the second power receiving coil 140b and the power transmitting coil 150 may form a maximum overlapped area (OA).

Referring back to FIG. 9, a length and an angle, at which the second power receiving coil 140b and the power transmitting coil 150 in FIG. 9 are formed, may be smaller than the length and angle illustrated in FIG. 7. For example, a central angle, at which the second power receiving coil 140b and the power transmitting coil 150 are formed, may be within the central angle of any one guide jaw 112 and any one stopping jaw 128 illustrated in FIG. 4.

Referring to FIGS. 4 and 10a, when the second coupling ring 127 is inserted into the first coupling ring 111 in the state on which the plurality of guide jaws 112 and the plurality of stopping jaws 128 are placed not to meet each other radially in the structure in FIG. 9, the second power receiving coil 140b and the power transmitting coil 150 may not be overlapped. In other words, the second power receiving coil 140b and the power transmitting coil 150 may not form an overlapped area (OA).

Referring to FIGS. 4 and 10b, when the second coupling ring 127 rotates in the state of being inserted into the first coupling ring 111, each stopping jaw 128 moves radially with respect to each guide jaw 112, and the plurality of stopping jaws 128 may be completely engaged with the plurality of guide jaws 112. In this case, the second power receiving coil 140b and the power transmitting coil 150 may be completely overlapped. In other words, the second power receiving coil 140b and the power transmitting coil 150 may form a maximum overlapped area (OA).

A plurality of second power receiving coils 140b, as illustrated in FIG. 11, may be formed on the lateral surface of the lid 120, and a plurality of power transmitting coils 150 may be formed on the lateral surface of the main body 110. In this case, the number of the second power receiving coils 140b and the number of the power transmitting coils 150 may be the same.

The plurality of second power receiving coils 140b, and the plurality of power transmitting coils 150 at positions corresponding to positions of the plurality of second power receiving coils 140b may form an overlapped area (OA) respectively. The overlapped area (OA) formed between the second power receiving coil 140b and the power transmitting coil 150 is described above based on a single second power receiving coil 140b and a single power transmitting coil 150, and the above description may be applied to the plurality of coils illustrated in FIG. 11. Accordingly, detailed description in relation to this is omitted.

The rotation-coupling, as described above, may be any coupling by which the lid 120 is coupled to or decoupled from the main body 110 by horizontally rotating with respect to the upper surface of the main body 110. Accordingly, even in a structure different from the structure in FIG. 4, the main body 110 and the lid 120 may be incompletely coupled before the lid 120 rotates with respect to the upper surface of the main body 110 to a predetermined angle, and the main body 110 and the lid 120 may be completely coupled when the lid 120 rotates with respect to the upper surface of the main body 110 to a predetermined angle.

In this case, as a rotation angle of the lid 120 becomes greater, a width of the overlapped area (OA) may become wider, and then when the lid 120 is completely rotation-coupled to the main body 110, the width of the overlapped area (OA) may be maximized.

An amount of electric currents induced to the second power receiving coil 140b may be proportional to a surface area of the overlapped area (OA).

Specifically, an amount of electric currents induced to the second power receiving coil 140b through the process of electromagnetic induction may be proportional to a coupling factor between the second power receiving coil 140b and the power transmitting coil 150.

The coupling factor between the two coils may become higher as the width of the overlapped area (OA) becomes wider. Accordingly, an amount of electric currents induced to the second power receiving coil 140b may be proportional to the surface area of the above-described overlapped area (OA).

The control module 121 may determine a coupling state of the lid 120 on the basis of an amount of electric currents induced to the second power receiving coil 140b.

The overlapped area (OA), as described above, may form a different surface area according to rotation of the lid 120, and the amount of electric currents induced to the second power receiving coil 140b may be proportional to a surface area of the overlapped area (OA). Accordingly, the amount of electric currents induced to the second power receiving coil 140b may vary according to rotation of the lid 120.

The control module 121 may find out a degree of rotation of the lid 120 on the basis of the amount of electric currents induced to the second power receiving coil 140b. By doing so, the control module 121 may indirectly determine a state of coupling of the lid 120 to the main body 110. The coupling state may be classified as a normal state and an abnormal state.

As an example, when the amount of electric currents induced to the second power receiving coil 140b is a maximum amount of electric currents, the control module 121 may determine that the coupling state is a normal state, and, when the amount of electric currents induced to the second power receiving coil 140b is less than a maximum amount of electric currents, the control module 121 may determine that the coupling state is an abnormal state.

The control module 121 may detect an amount of electric currents induced to the second power receiving coil 140b. Any current sensor or any current detection circuit may be used for the operation of detecting an amount of electric currents performed by the control module 121.

As described with reference to FIGS. 8b and 10b, when the lid 120 is completely rotation-coupled to the main body 110, the width of the overlapped area (OA) between the second power receiving coil 140b and the power transmitting coil 150 may be maximized. In this case, an amount of electric currents induced to the second power receiving coil 140b may be a maximum amount.

The control module 121 may identify a preset maximum amount of electric currents with reference to an internal memory, and may compare an amount of electric currents induced to the second power receiving coil 140b with the identified maximum amount of electric currents.

As a result of comparison, when an amount of electric currents induced to the second power receiving coil 140b is the same as the maximum amount of electric currents, the control module 121 may consider that the lid 120 is completely rotation-coupled to the main body 110 and may determine that the coupling state is a normal state. When an amount of electric currents induced to the second power receiving coil 140b is less than the maximum amount of electric currents, the control module 121 may consider that the lid 120 is incompletely rotation-coupled to the main body 110 and may determine that the coupling state is an abnormal state.

As another example, when an amount of electric currents induced to the second power receiving coil 140b is greater than a reference amount of electric currents, the control module 121 may determine that the coupling state is a normal state, and, when an amount of electric currents induced to the second power receiving coil 140b is less than the reference amount of electric currents, the control module 121 may determine that the coupling state is an abnormal state.

As described above, the width of the overlapped area (OA) may be maximized when the lid 120 is completely rotation-coupled to the main body 110. However, the wireless induction heating cooker 100 may perform cooking operations even when the lid 120 is incompletely rotation-coupled to the main body 110, specifically, even when the stopping jaw 128 in FIG. 4 is incompletely engaged with the guide jaw 112.

In other words, even when the lid 120 is rotated to a predetermined angle with respect to the main body 110 and is coupled to the main body 110, the lid 120 may be designed to tolerate high pressures generated in the internal pot 130 during cooking.

In this case, the control module 121 may determine a coupling state by comparing an amount of electric currents induced to the second power receiving coil 140b with the reference amount of electric currents. The reference amount of electric currents may be set by the user at random, and, for example, may be set to 90 % of the above-described maximum amount of electric currents.

When an amount of electric currents induced to the second power receiving coil 140b is greater than the reference amount of electric currents and less than the maximum amount of electric currents, the control module 121 may consider that the lid 120 is rotation-coupled to the main body 110 to the extent that cooking operations may be performed, and may determine that the coupling state is a normal state. When an amount of electric currents induced to the second power receiving coil 140b is less than the reference amount of electric currents, the control module 121 may consider that the lid 120 is not rotation-coupled to the main body 110 to the extent that cooking operations may be performed, and may determine that the coupling state is an abnormal state.

The present disclosure, as described above, may electrically find out whether the main body 110 and the lid 120 are normally coupled, without an additional physical component, thereby accurately detecting a coupling state of the lid with no increase in production costs and with no decrease in productivity.

When the coupling state of the lid 120 is an abnormal state, the control module 121 may supply an output control signal to the display module 123, and the display module 123 may output abnormality information according to the output control signal.

The abnormality information may be any information that tells the coupling state of the lid 120 is an abnormal state. The abnormality information, for example, may be text and image information for requesting the user to normally couple the lid 120.

Specifically, when determining the coupling state of the lid 120 is an abnormal state, the control module 121 may supply an output control signal, which is a digital signal, to the display module 123. The display module 123 may receive the output control signal from the control module 121, may identify abnormality information corresponding to the output control signal with reference to the internal memory, and may output the identified abnormality information visually.

The present disclosure, as described above, may inform the user about an abnormal coupling between the main body 110 and the lid 120, thereby preventing an explosion or a fire during cooking, caused by an abnormal coupling of the lid 120.

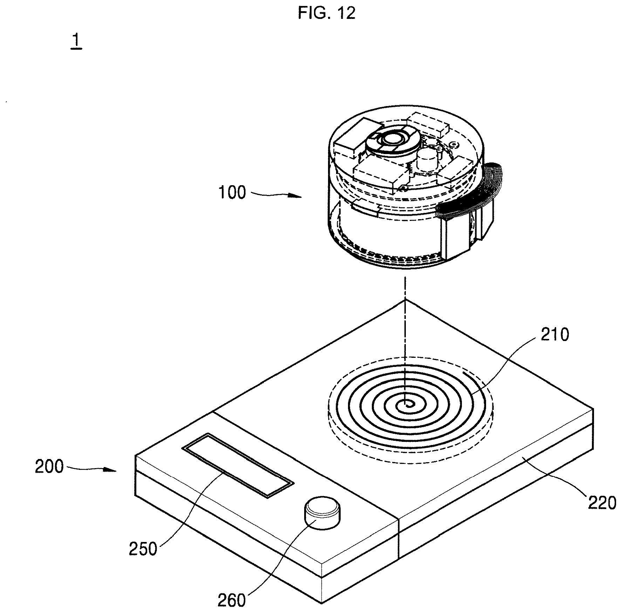

Next, an exemplary wireless induction heating system is described with reference to FIGS. 6 and 12.

FIG. 12 is a view illustrating an exemplary wireless induction heating system.

Referring to FIG. 12, the exemplary wireless induction heating system 1 may include an induction heating apparatus 200, and a wireless induction heating cooker 100 that operates on the induction heating apparatus 200. The wireless induction heating cooker 100 constituting the wireless induction heating system 1 is the same as the wireless induction heating cooker described with reference to FIGS. 2 to 11. Below, differences are described.

The induction heating apparatus 200, as illustrated in FIG. 6, may include a main PCB, and a heating coil 210 that generates a magnetic field according to control by the main PCB. Specifically, the induction heating apparatus 200 may be connected to an external power source, and the main PCB in the induction heating apparatus 200 may supply electric currents to the heating coil 210, using the external power source. When the electric currents are supplied to the heating coil 210, a magnetic field may be generated in the heating coil 210.

Additionally, the induction heating apparatus 200, as illustrated in FIG. 12, may include a display 250 and a knob switch 260. Though not illustrated in the drawings, the induction heating apparatus 200 may further include a communicator that performs data communication with the communication module 122 of the wireless induction heating cooker 100. The display 250, the knob switch 260 and the communicator may be electrically connected to the main PCB and may be controlled by the main PCB, or may supply a signal to the main PCB.

The knob switch 260 may be provided on an upper surface of the induction heating apparatus 200, and may supply a signal according to degrees of rotation of the knob switch to the main PCB. The main PCB may determine an output from the heating coil 210 according to the signal supplied by the knob switch 260. In other words, an amount of electric currents supplied to the heating coil 210 may be controlled according to the degrees of rotation of the knob switch 260.

The wireless induction heating cooker 100 may include a main body 110, and a lid 120 that is rotation-coupled to the main body 110. The main body 110 and the lid 120 are described above. Accordingly, detailed description in relation to this is omitted.

The wireless induction heating cooker 100 may operate on an area formed by the heating coil 210. The area formed by the heating coil 210 may be a minimum area that may include all parts of the heating coil 210. For example, when the heating coil 210 is a planar circular coil, a surface of the area formed by the heating coil 210 may be a surface of a circle determined by a coil radius that is a distance from a center of the heating coil 210 to an outer circumferential surface of the heating coil 210.

The wireless induction heating cooker 100 may perform cooking operations using a magnetic field generated in the heating coil 210. The cooking operations may include entire operations of the control module 121, the communication module 122 and the display module 123 in FIG. 6 as well as an operation of cooking an item subject to cooking through heating of the internal pot.

Accordingly, the wireless induction heating cooker 100 may determine a coupling state of the lid 120 on the basis of an amount of power received through the heating coil 210. Specifically, the wireless induction heating cooker 100 may determine a coupling state of the lid 120 on the basis of an amount of electric currents induced to the second power receiving coil 140b in FIG. 6. The process of determining a coupling state is described above. Detailed description in relation to this is omitted.

The induction heating apparatus 200 and the wireless induction heating cooker 100 may share state information by performing mutual data communication. The induction heating apparatus 200 may control output from the heating coil 210 on the basis of state information of the wireless induction heating cooker, and the wireless induction heating cooker 100 may control an internal electronic device on the basis of the state information of the induction heating apparatus 200.

For example, when the control module 121 determines that the coupling state of the lid 120 is an abnormal state, the wireless induction heating cooker 100 may transmit an abnormality signal to the induction heating apparatus 200 through the communication module 122. The induction heating apparatus 200 may receive the abnormality signal through the communicator, and the main PCB may control the display 250 and may output abnormality information visually on the basis of the received abnormality signal.

## Claims

1. A wireless induction heating cooker (100), which is operatable on an induction heating apparatus (200) that supplies a magnetic field generated in a heating coil (210), the cooker (100) comprising:
a main body (110) that has an opened upper surface;
a lid (120) that is rotation-coupled to the upper surface of the main body (110); and that performs cooking operations using the magnetic field generated in the heating coil (210),
wherein the wireless induction heating cooker (100) is configured to determine a coupling state of the lid (120) on the basis of an amount of power received through the heating coil (210);
an internal pot (130) that is stored in the main body (110) and that is heatable by the magnetic field generated in the heating coil (210) of the induction heating apparatus (200);
a first power receiving coil (140a) which is provided on a bottom surface of the main body (110) and to which electric currents are induced by the magnetic field generated in the heating coil (210);
a power transmitting coil (150) that is provided on one lateral surface of the main body (110) and that is supplied with electric currents induced to the first power receiving coil (140a) and generates a magnetic field;
a second power receiving coil (140b) which is provided on one lateral surface of the lid (120) and to which electric currents are induced by the magnetic field generated in the power transmitting coil (150); and
a control module (121) configured to determine the coupling state of the lid (120) on the basis of an amount of electric currents induced to the second power receiving coil (140b).

2. The wireless induction heating cooker (100) of claim 1, wherein a first coupling ring (111) is provided on the upper surface of the main body (110), and
a second coupling ring (127) that is rotation-coupled to the first coupling ring (111) is provided on a lower surface of the lid (120).

3. The wireless induction heating cooker (100) of claim 2, wherein the first coupling ring (111) is depressed from the upper surface of the main body (110), and the second coupling ring (127) protrudes from the lower surface of the lid (120), and
the second coupling ring (127) is inserted into a groove (113) of the first coupling ring (111), is rotated and then is rotation-coupled to the first coupling ring (111).

4. The wireless induction heating cooker (100) of claim 3, wherein the first coupling ring (111) includes a plurality of guide jaws (112), and the second coupling ring (127) includes a plurality of stopping jaws (128), and
when the second coupling ring (127) is inserted into the groove (113) of the first coupling ring (111) and then is rotated, the plurality of stopping jaws (128) are engaged with the plurality of guide jaws (112).

5. The wireless induction heating cooker (100) of any one of claims 1 to 4, wherein the second power receiving coil (140b) supplies electric currents induced by the magnetic field generated in the power transmitting coil (150) to at least one of electronic devices provided in the lid (120).

6. The wireless induction heating cooker (100) of any one of claims 1 to 5, wherein the wireless induction heating cooker (100) further includes a first power conversion circuit (170) for converting electric currents induced to the first power receiving coil (140a) and for supplying the converted electric currents to the power transmitting coil (150).

7. The wireless induction heating cooker (100) of any one of claims 1 to 6, wherein the power transmitting coil (150) is formed to have a first length on one lateral surface of an upper portion of the main body (110) along an outer surface of the main body (110), and
the second power receiving coil (140b) is formed to have a second length on one lateral surface of the lid (120) along an outer surface of the lid (120).

8. The wireless induction heating cooker (100) of any one of claims 1 to 7, wherein the power transmitting coil (150) is formed within a first central angle (θ1, θ1) along a cylindrical surface of the main body (110), and
the second power receiving coil (140b) is formed within a second central angle (θ2, Θ2') along a cylindrical surface of the lid (120).

9. The wireless induction heating cooker (100) of any one of claims 1 to 8, wherein the second power receiving coil (140b) and the power transmitting coil (150) form an overlapped area according to a degree to which the lid (120) is rotated with respect to the main body (110).

10. The wireless induction heating cooker (100) of any one of claims 1 to 9, wherein, when an amount of electric currents induced to the second power receiving coil (140b) is greater than a reference amount of electric currents, the control module (121) is configured to determine that the coupling state is a normal state, and, when an amount of electric currents induced to the second power receiving coil (140b) is less than the reference amount of electric currents, the control module (121) is configured to determine that the coupling state is an abnormal state.

11. The wireless induction heating cooker (100) of any one of claims 1 to 9, wherein when an amount of electric currents induced to the second power receiving coil (140b) is a maximum amount of electric currents, the control module (121) is configured to determine that the coupling state is a normal state, and, when an amount of electric currents induced to the second power receiving coil (140b) is less than the maximum amount of electric currents, the control module (121) is configured to determine that the coupling state is an abnormal state.

12. The wireless induction heating cooker (100) of claim 10 or 11, wherein, when the coupling state of the lid (120) is an abnormal state, the control module (121) supplies an output control signal to the display module (123), and
the display module (123) outputs abnormality information according to the output control signal.

13. The wireless induction heating cooker (100) of any one of claims 1 to 12, wherein the wireless induction heating cooker (100) further includes a lateral surface heating coil (160) that is placed perpendicularly on an outer circumferential surface of the internal pot (130), that is connected to the first power receiving coil (140a), and that heats the internal pot (130) using the induced currents.

14. A wireless induction heating system (1), comprising:
an induction heating apparatus (200) that includes a main PCB, and a heating coil (210) generating a magnetic field according to control by the main PCB; and
a wireless induction heating cooker (100) according to any one of claims 1 to 13.

## Patentansprüche

1. Kabelloser Induktionskocher (100), der auf einer Induktionsheizvorrichtung (200) betreibbar ist, die ein Magnetfeld zuführt, das in einer Heizspirale (210) erzeugt wird, wobei der Kocher (100) aufweist:
einen Hauptkörper (110), der eine offene obere Fläche aufweist;
einen Deckel (120), der mit der oberen Fläche des Hauptkörpers (110) drehgekoppelt ist; und unter Verwendung des Magnetfeldes, das in der Heizspirale (210) erzeugt wird, Kochvorgänge durchführt,
wobei der kabellose Induktionskocher (100) konfiguriert ist, um einen Kopplungszustand des Deckels (120) auf Grundlage einer Energiemenge zu bestimmen, die durch die Heizspirale (210) erhalten wird;
einen internen Topf (130), der in dem Hauptkörper (110) untergebracht ist und durch das Magnetfeld, das in der Heizspirale (210) der Induktionsheizvorrichtung (200) erzeugt wird, aufheizbar ist;
eine erste Stromempfangsspule (140a), die auf einer Bodenfläche des Hauptkörpers (110) bereitgestellt wird und an der elektrische Ströme durch das Magnetfeld, das in der Heizspirale (210) erzeugt wird, induziert werden;
eine Stromübertragungsspule (150), die auf einer Seitenfläche des Hauptkörpers (110) bereitgestellt wird und mit elektrischen Strömen versorgt wird, die an der ersten Stromempfangsspule (140a) induziert werden, und ein Magnetfeld erzeugt;
eine zweite Stromempfangsspule (140b), die auf einer Seitenfläche des Deckels (120) bereitgestellt wird und an der elektrische Ströme durch das Magnetfeld, das in der Stromübertragungsspule (150) erzeugt wird, induziert werden; und
ein Steuerungsmodul (121), das konfiguriert ist, um den Kopplungszustand des Deckels (120) auf Grundlage einer Menge an elektrischen Strömen zu bestimmen, die an der zweiten Stromempfangsspule (140b) induziert werden.

2. Kabelloser Induktionskocher (100) nach Anspruch 1, wobei ein erster Kopplungsring (111) auf der oberen Fläche des Hauptkörpers (110) bereitgestellt ist, und
ein zweiter Kopplungsring (127), der mit dem ersten Kopplungsring (111) drehgekoppelt ist, auf einer unteren Fläche des Deckels (120) bereitgestellt ist.

3. Kabelloser Induktionskocher (100) nach Anspruch 2, wobei der erste Kopplungsring (111) von der oberen Fläche des Hauptkörpers (110) abgesenkt ist, und der zweite Kopplungsring (127) aus der unteren Fläche des Deckels (120) herausragt, und
der zweite Kopplungsring (127) in eine Nut (113) des ersten Kopplungsrings (111) eingesetzt wird, gedreht wird und dann mit dem ersten Kopplungsring (111) drehgekoppelt ist.

4. Kabelloser Induktionskocher (100) nach Anspruch 3, wobei der erste Kopplungsring (111) eine Vielzahl von Führungsbacken (112) aufweist, und der zweite Kopplungsring (127) eine Vielzahl von Anschlagbacken (128) aufweist, und,
wenn der zweite Kopplungsring (127) in die Nut (113) des ersten Kopplungsrings (111) eingesetzt wird und dann gedreht wird, die Vielzahl der Anschlagbacken (128) mit der Vielzahl der Führungsbacken (112) in Eingriff kommen.

5. Kabelloser Induktionskocher (100) nach einem der Ansprüche 1 bis 4, wobei die zweite Stromempfangsspule (140b) elektrische Ströme, die von dem Magnetfeld induziert werden, das in der Stromübertragungsspule (150) erzeugt wird, mindestens einer der elektronischen Vorrichtungen zuführt, die in dem Deckel (120) vorgesehen sind.

6. Kabelloser Induktionskocher (100) nach einem der Ansprüche 1 bis 5, wobei der kabellose Induktionskocher (100) ferner eine erste Leistungswandlerschaltung (170) zum Umwandeln von elektrischen Strömen aufweist, die an der ersten Stromempfangsspule (140a) induziert werden, und zum Zuführen der umgewandelten elektrischen Ströme an die Stromübertragungsspule (150).

7. Kabelloser Induktionskocher (100) nach einem der Ansprüche 1 bis 6, wobei die Stromübertragungsspule (150) so ausgebildet ist, dass sie eine erste Länge an einer Seitenfläche eines oberen Abschnitts des Hauptkörpers (110) entlang einer Außenfläche des Hauptkörpers (110) hat, und
die zweite Stromempfangsspule (140b) so ausgebildet ist, dass sie eine zweite Länge an einer Seitenfläche des Deckels (120) entlang einer Außenfläche des Deckels (120) hat.

8. Kabelloser Induktionskocher (100) nach einem der Ansprüche 1 bis 7, wobei die Stromübertragungsspule (150) innerhalb eines ersten mittleren Winkels (θ1, θ1) entlang einer zylindrischen Oberfläche des Hauptkörpers (110) ausgebildet ist, und
die zweite Stromempfangsspule (140b) innerhalb eines zweiten mittleren Winkels (θ2, 02') entlang einer zylindrischen Oberfläche des Deckels (120) ausgebildet ist.

9. Kabelloser Induktionskocher (100) nach einem der Ansprüche 1 bis 8, wobei die zweite Stromempfangsspule (140b) und die Stromübertragungsspule (150) einen Überlappungsbereich gemäß einem Ausmaß bilden, um das der Deckel (120) in Bezug auf den Hauptkörper (110) gedreht wird.

10. Kabelloser Induktionskocher (100) nach einem der Ansprüche 1 bis 9, wobei, wenn eine Menge an elektrischen Strömen, die an der zweiten Stromempfangsspule (140b) induziert werden, größer ist als eine Referenzmenge an elektrischen Strömen, das Steuerungsmodul (121) konfiguriert ist, um zu bestimmen, dass der Kopplungszustand ein normaler Zustand ist, und, wenn eine Menge an elektrischen Strömen, die an der zweiten Stromempfangsspule (140b) induziert werden, kleiner ist als die Referenzmenge an elektrischen Strömen, das Steuerungsmodul (121) konfiguriert ist, um zu bestimmen, dass der Kopplungszustand ein abnormer Zustand ist.

11. Kabelloser Induktionskocher (100) nach einem der Ansprüche 1 bis 9, wobei, wenn ein Betrag an elektrischen Strömen, die an der zweiten Stromempfangsspule (140b) induziert werden, ein Höchstbetrag an elektrischen Strömen ist, das Steuerungsmodul (121) konfiguriert ist, um zu bestimmen, dass der Kopplungszustand ein Normalzustand ist, und, wenn ein Betrag an elektrischen Strömen, die an der zweiten Stromempfangsspule (140b) induziert werden, kleiner ist als der Höchstbetrag an elektrischen Strömen, das Steuerungsmodul (121) konfiguriert ist, um zu bestimmen, dass der Kopplungszustand ein abnormer Zustand ist.

12. Kabelloser Induktionskocher (100) nach Anspruch 10 oder 11, wobei, wenn der Kopplungszustand des Deckels (120) ein abnormer Zustand ist, das Steuerungsmodul (121) ein Ausgabesteuersignal an das Anzeigemodul (123) sendet, und
das Anzeigemodul (123) eine Anomalie-Information gemäß dem Ausgabesteuersignal ausgibt.

13. Kabelloser Induktionskocher (100) nach einem der Ansprüche 1 bis 12, wobei der kabellose Induktionskocher (100) ferner eine Seitenflächen-Heizspirale (160) aufweist, die senkrecht auf einer äußeren Umfangsfläche des internen Topfes (130) , die mit der ersten Stromempfangsspule (140a) verbunden ist, platziert ist, und den internen Topf (130) unter Verwendung der induzierten Ströme aufheizt.

14. Kabelloses Induktionsheizsystem (1), das aufweist:
eine Induktionsheizvorrichtung (200), aufweisend eine Hauptplatine sowie eine Heizspirale (210), die gemäß der Steuerung durch die Hauptplatine ein Magnetfeld erzeugt; und
einen kabellosen Induktionskocher (100) nach einem der Ansprüche 1 bis 13.

## Revendications

1. Appareil de cuisson à chauffage par induction sans fil (100), qui peut être utilisé sur un appareil de chauffage par induction (200) qui fournit un champ magnétique généré dans une bobine de chauffage (210), l'appareil de cuisson (100) comprenant :
un corps principal (110) qui présente une surface supérieure ouverte ;
un couvercle (120) qui est accouplé en rotation à la surface supérieure du corps principal (110) ; et qui réalise des opérations de cuisson au moyen du champ magnétique généré dans la bobine de chauffage (210),
dans lequel l'appareil de cuisson à chauffage par induction sans fil (100) est configuré pour déterminer un état d'accouplement du couvercle (120) sur la base d'une quantité de puissance reçue par le biais de la bobine de chauffage (210) ;
un récipient interne (130) qui est stocké dans le corps principal (110) et qui peut être chauffé par le champ magnétique généré dans la bobine de chauffage (210) de l'appareil de chauffage par induction(200) ;
une première bobine de réception de puissance (140a) qui est disposée sur une surface inférieure du corps principal (110) et dans laquelle des courants électriques sont induits par le champ magnétique généré dans la bobine de chauffage (210) ;
une bobine de transmission de puissance (150) qui est disposée sur une surface latérale du corps principal (110) et qui est dotée de courants électriques induits dans la première bobine de réception de puissance (140a) et génère un champ magnétique ;
une seconde bobine de réception de puissance (140b) qui est disposée sur une surface latérale du couvercle (120) et dans laquelle des courants électriques sont induits par le champ magnétique généré dans la bobine de transmission de puissance (150) ; et
un module de commande (121) configuré pour déterminer l'état d'accouplement du couvercle (120) sur la base d'une quantité de courants électriques induits dans la seconde bobine de réception de puissance (140b).

2. Appareil de cuisson à chauffage par induction sans fil (100) selon la revendication 1, dans lequel un premier anneau d'accouplement (111) est disposé sur la surface supérieure du corps principal (110), et
un second anneau d'accouplement (127) qui est accouplé en rotation au premier anneau d'accouplement (111) est disposé sur une surface inférieure du couvercle (120).

3. Appareil de cuisson à chauffage par induction (100) selon la revendication 2, dans lequel le premier anneau d'accouplement (111) est enfoncé à partir de la surface supérieure du corps principal (110), et le second anneau d'accouplement (127) fait saillie à partir de la surface inférieure du couvercle (120), et
le second anneau d'accouplement (127) est inséré dans une rainure (113) du premier anneau d'accouplement (111), est tourné puis accouplé en rotation au premier anneau d'accouplement (111).

4. Appareil de cuisson à chauffage par induction sans fil (100) selon la revendication 3, dans lequel le premier anneau d'accouplement (111) inclut une pluralité de mâchoires de guidage (112), et le second anneau d'accouplement (127) inclut une pluralité de mâchoires d'arrêt (128), et
lorsque le second anneau d'accouplement (127) est inséré dans la rainure (113) du premier anneau d'accouplement (111) puis est tourné, la pluralité de mâchoires d'arrêt (128) est mise en prise avec la pluralité de mâchoires de guidage (112).

5. Appareil de cuisson à chauffage par induction sans fil (100) selon l'une quelconque des revendications 1 à 4, dans lequel la seconde bobine de réception de puissance (140b) fournit des courants électriques induits par le champ magnétique généré dans la bobine de transmission de puissance (150) à au moins l'un des dispositifs électroniques disposés dans le couvercle (120).

6. Appareil de cuisson à chauffage par induction (100) selon l'une quelconque des revendications 1 à 5, dans lequel l'appareil de cuisson à chauffage par induction sans fil (100) inclut en outre un premier circuit de conversion de puissance (170) destiné à convertir des courants électriques induits dans la première bobine de réception de puissance (140a) et destiné à fournir les courants électriques convertis à la bobine de transmission de puissance (150).

7. Appareil de cuisson à chauffage par induction sans fil (100) selon l'une quelconque des revendications 1 à 6, dans lequel la bobine de transmission de puissance (150) est formée pour présenter une première longueur sur une surface latérale d'une partie supérieure du corps principal (110) le long d'une surface externe du corps principal (110), et
la seconde bobine de réception de puissance (140b) est formée pour présenter une seconde longueur sur une surface latérale du couvercle (120) le long d'une surface externe du couvercle (120).

8. Appareil de cuisson à chauffage par induction sans fil (100) selon l'une quelconque des revendications 1 à 7, dans lequel la bobine de transmission de puissance (150) est formée dans un premier angle central (θ1, θ1) le long d'une surface cylindrique du corps principal (110), et
la seconde bobine de réception de puissance (140b) est formée dans un second angle central (θ2, Θ2') le long d'une surface cylindrique du couvercle (120).

9. Appareil de cuisson à chauffage par induction sans fil (100) selon l'une quelconque des revendications 1 à 8, dans lequel la seconde bobine de réception de puissance (140b) et la bobine de transmission de puissance (150) forment une zone chevauchée selon un degré auquel le couvercle (120) est tourné par rapport au corps principal (110).

10. Appareil de cuisson à chauffage par induction (100) selon l'une quelconque des revendications 1 à 9, dans lequel, lorsqu'une quantité de courants électriques induits dans la seconde bobine de réception de puissance (140b) est supérieure à une quantité de référence de courants électriques, le module de commande (121) est configuré pour déterminer que l'état d'accouplement est un état normal, et lorsqu'une quantité de courants électriques induits dans la seconde bobine de réception de puissance (140b) est inférieure à la quantité de référence de courants électriques, le module de commande (121) est configuré pour déterminer que l'état d'accouplement est un état anormal.

11. Appareil de cuisson à chauffage par induction sans fil (100) selon l'une quelconque des revendications 1 à 9, dans lequel lorsqu'une quantité de courants électriques induits dans la seconde bobine de réception de puissance (140b) est une quantité maximale de courants électriques, le module de commande (121) est configuré pour déterminer que l'état d'accouplement est un état normal, et, lorsqu'une quantité de courants électriques induits dans la seconde bobine de réception de puissance (140b) est inférieure à la quantité maximale de courants électriques, le module de commande (121) est configuré pour déterminer que l'état d'accouplement est un état anormal.

12. Appareil de cuisson à chauffage par induction sans fil (100) selon la revendication 10 ou 11, dans lequel, lorsque l'état d'accouplement du couvercle (120) est un état anormal, le module de commande (121) fournit un signal de commande de sortie au module d'affichage (123), et
le module d'affichage (123) émet des informations d'anomalie en fonction du signal de commande de sortie.

13. Appareil de cuisson à chauffage par induction sans fil (100) selon l'une quelconque des revendications 1 à 12, dans lequel l'appareil de cuisson à chauffage par induction sans fil (100) inclut en outre une bobine de chauffage de surface latérale (160) qui est placée perpendiculairement sur une surface circonférentielle externe du récipient interne (130), qui est raccordée à la première bobine de réception de puissance (140a), et qui chauffe le récipient interne (130) au moyen des courants induits.

14. Système de chauffage par induction sans fil (1), comprenant :
un appareil de chauffage par induction (200) qui inclut une carte de circuit imprimé principale, et une bobine de chauffage (210) générant un champ magnétique selon une commande par la carte de circuit imprimé principale ; et
un appareil de cuisson à chauffage par induction sans fil (100) selon l'une quelconque des revendications 1 à 13.
